# EUROPÄISCHE PATENTSCHRIFT

(11) **EP 0 976 103 B1**
(45) Veröffentlichungstag und Bekanntmachung des Hinweises auf die Patenterteilung: **10.04.2002**
(21) Anmeldenummer: 97907012.5
(22) Anmeldetag: 23.01.1997
(51) Int. Cl.: G06K 19/077

(54) **DATENKARTE UND VERFAHREN ZUR HERSTELLUNG EINER DATENKARTE, SOWIE VORRICHTUNG ZUR HERSTELLUNG EINER DATENKARTE**
DATA CARD AND PROCESS AND DEVICE FOR ITS PRODUCTION
CARTE DE DONNEES, PROCEDE DE PRODUCTION D'UNE CARTE DE DONNEES ET DISPOSITIF PERMETTANT DE PRODUIRE UNE TELLE CARTE DE DONNEES

(30) Priorität: 26.01.1996 DE 19602821
(43) Veröffentlichungstag der Anmeldung: 02.02.2000
(73) Patentinhaber: Infineon Technologies AG, 81669 München (DE)
(72) Erfinder: MELZER, Roland, D-58832 Schwelm (DE); HOUDEAU, Detlef, D-84085 Langquaid (DE)
(74) Vertreter: Epping Hermann & Fischer
(86) Internationale Anmeldenummer: DE9700118
(87) Internationale Veröffentlichungsnummer: WO9727564

(56) Entgegenhaltungen:
- EP-A- 0 503 730
- DE-A- 4 218 923
- GB-A- 2 095 175
- GB-A- 2 279 907

## Beschreibung

Die Erfindung bezieht sich auf eine Datenkarte nach dem Oberbegriff des Anspruchs 1, ein Verfahren zur Herstellung einer Datenkarte nach dem Oberbegriff des Anspruchs 2, sowie eine Vorrichtung zur Herstellung einer Chipkarte nach dem Oberbegriff des Anspruchs 11.

Eine derartige Chipkarte und ein entsprechendes Verfahren zu ihrer Herstellung ist beispielsweise aus der GB-A-2 279 907 bekannt geworden. Das die integrierten Schaltkreise aufnehmende Hüllelement ist zwischen den beiden Kartendecklagen aus PVC sowie zwischen zwei Zwischenschichten aus Polyester eingebettet, wobei letztere zu beiden Seiten mit einem thermisch aktivierbaren Haftmittel überzogen sind. Die Zwischenschichten dienen zur Schichtverstärkung und damit als Schutz des Hüllelementes gegen ein Herausbrechen aus den PVC-Schichten.

Die Anwendungsmöglichkeiten von in der Regel im Scheckkartenformat ausgebildeten Chipkarten sind aufgrund einer hohen funktionalen Flexibilität äußerst vielseitig geworden und nehmen mit der steigenden Rechenleistung und Speicherkapazität der verfügbaren integrierten Schaltungen weiterhin zu. Neben den derzeit typischen Anwendungsfeldern solcher Chipkarten in der Form von Krankenversichertenkarten, Gleitzeiterfassungskarten, Telefonkarten ergeben sich zukünftig insbesondere Anwendungen im elektronischen Zahlungsverkehr, bei der Zugriffskontrolle auf Rechner, bei geschützten Datenspeichern und dergleichen. Hinsichtlich der Art der Kopplung an ein Terminal bzw. ein Lesegerät unterscheidet man kontaktbehaftete Chipkarten und sogenannte kontaktlose Chipkarten. Bei einer kontaktbehafteten Chipkarte erfolgt die Kontaktierung durch ein metallisches Kontaktfeld mit üblicherweise nach einem ISO-Standard normierter Kontaktelemente. Die Zuverlässigkeit von Chipkarten mit Kontakten konnte zwar aufgrund der steigenden Produktionserfahrung der Hersteller in den vergangenen Jahren stetig verbessert werden, so daß zum Beispiel die Ausfallquote von Telefonkarten über eine Lebensdauer von einem Jahr heute deutlich unter ein Promille liegt. Nach wie vor sind jedoch Kontakte eine der häufigsten Fehlerquellen in elektromechanischen Systemen. Störungen können zum Beispiel durch Verschmutzung oder Abnutzung der Kontakte entstehen. Beim Einsatz in mobilen Geräten können Vibrationen zu kurzzeitigen Kontaktunterbrechungen führen. Da die Kontakte auf der Oberfläche der Chipkarte direkt mit den Eingängen der integrierten Schaltung verbunden sind, besteht darüber hinaus die Gefahr, daß elektrostatische Entladungen die integrierte Schaltung im Innern der Karte schwächen oder gar zerstören können. Diese technischen Probleme werden von der kontaktlosen Chipkarte umgangen. Neben diesen technischen Vorteilen bietet die kontaktlose Chipkarte darüber hinaus eine Reihe interessanter neuer Möglichkeiten in der Anwendung für den Kartenherausgeber und den Kartenbenutzer. So müssen kontaktlose Chipkarten zum Beispiel nicht unbedingt in einen Kartenleser eingesteckt werden, sondern es gibt Systeme, die über eine Entfernung von bis zu einem Meter funktionieren. Ein breites Anwendungsgebiet stellt beispielsweise der öffentliche Personennahverkehr dar, wo in möglichst kurzer Zeit möglichst viele Personen erfaßt werden müssen. Neben weiteren Vorteilen bietet die kontaktlose Chipkarte den Vorzug, daß keine technischen Elemente an der Kartenoberfläche sichtbar sind, so daß die optische Gestaltung der Kartenoberfläche nicht durch Magnetstreifen oder Kontaktflächen eingeschränkt wird. Die Nachteile bei den derzeit verfügbaren kontaktlosen Chipkarten liegen vor allem in den zusätzlichen Bauelementen wie Übertragungsspulen oder Kondensatorplatten, die in die Karte zu integrieren sind. Dies führt dazu, daß bis heute die Herstellung von kontaktlosen Chipkarten deutlich teurer ist als die vergleichbarer Karten mit Kontakten. Darüber hinaus ist die in der kontaktlosen Chipkarte erforderliche Elektronik zur kontaktlosen Übertragung von elektrischen Signalen an das Terminal aufwendiger. Im Prinzip geeignet hierfür sind Schaltungen, die eine Signalübertragung mittels Mikrowellen, optischer Signale, kapazitiver oder induktiver Kopplung ermöglichen, wobei sich wegen der flachen Bauform der Chipkarte am ehesten die kapazitive und die induktive Kopplung eignen. Derzeit erfolgt bei den meisten kontaktlosen Karten die Übertragung auf induktivem Wege, mit dem sich sowohl die Daten wie auch die Energieübertragung realisieren lassen. So sind im Kartenkörper als Koppelelemente eine oder mehrere Induktionsspulen integriert ausgebildet. Die Übertragung von elektrischen Signalen erfolgt nach dem Prinzip des lose gekoppelten Transformators, wobei die Trägerfrequenz beispielsweise im Bereich zwischen 100 und 300 kHz oder bei einigen MHz, insbesondere der Radiofrequenz von 13,56 MHz liegt. Hierfür werden Induktionsspulen mit einem gegenüber der Grundfläche des Halbleiterchips von in der Größenordnung etwa 10 mm² wesentlich größeren Spulenflächen von typischerweise etwa 30 bis 40 cm² benötigt, wobei die Induktionsspulen auf geeignete Weise mit der auf dem Halbleiterchip befindlichen Schaltung kontaktiert werden müssen. Hierbei wird der Halbleiterchip zunächst auf einem Zwischenträger positioniert, fixiert und elektrisch kontaktiert. Anschließend wird zum Schutz gegen Umwelteinflüsse eine Umhüllung vorgesehen, vorzugsweise mit einer Duroplast-Kunststoffmasse. Der den Halbleiterchip abstützende Träger, welcher zunächst als separates Bauteil vorliegt und üblicherweise auch Chipmodul genannt wird, wird anschließend mit der in der Regel nur wenige Windungen aufweisenden und flach ausgebildeten Induktionsspule vorzugsweise durch Schweißen, Weich- oder Hartlöten kontaktiert und schließlich zur Fertigstellung der Chipkarte in den Kartenkörper einlaminiert.

Die Materialien, der Aufbau und die Herstellung des Kartenkörpers einer Chipkarte werden im wesentlichen durch die Funktionselemente der Karte sowie durch die Belastung der Karte bei der Handhabung während der Anwendung bestimmt. Heute übliche Materialien für Datenkarten sind Polyvinylclorid (PVC), welches das preisgünstigste aller verfügbaren Materialien darstellt und ein weites Einsatzspektrum abdeckt, Acrylnitril-Butadien-Styrol (ABS), welches sich insbesondere durch eine hohe Festigkeit und Temperaturbeständigkeit auszeichnet, sowie Polycarbonat, welches hohe Langlebigkeit ermöglicht, allerdings teurer ist. Zur Herstellung einer Datenkarte wird in der Regel das Laminierverfahren angewendet, bei dem verschiedene Folien, die Deckfolien und die Inlett-Folien des zumeist als separaten, vorgefertigten Bauelementes vorliegenden Chipmoduls fest mit dem Kartenkörper verschweißt wird. Mit diesem Verfahren lassen sich hohe Ansprüche an die Verbundqualität zwischen Chipmodul und Kartenkörper erfüllen, wobei der Chip praktisch nicht mehr aus der Karte herausgelöst werden kann, ohne diese zu zerstören. Üblicherweise werden die Deckfolien vor dem Zusammenfügen mit einer durch Fräsen erzeugten Ausnehmung versehen, in welche das Chipmodul eingeklebt wird. Zur Egalisierung des vorhandenen Höhenausgleiches von Teilstrukturen des Chipmoduls und zur Ausfüllung von Hohlräumen kommen Zwischenlagen aus Thermoplast-Folien zum Einsatz, die vorab stanz- und/oder frästechnisch hergestellte Ausnehmungen und Löcher besitzen, in welche das Chipmodul eingesetzt werden kann. Ein Nachteil der Auflaminierung von derartigen Zwischenlagen liegt darin, daß aufgrund einer Vielzahl vorliegender Chipmodule mit unterschiedlichen Abmessungen und Bauhöhen und unterschiedlichen Anordnungen der Teilstrukturen eine vollständige Gleichmäßigkeit der Egalisierung in der Massenfertigung von Datenkarten nicht erzielt werden kann. Darüber hinaus erfordern die zum Zwecke des Höhenausgleiches mit Ausnehmungen und Öffnungen versehenen Zwischenlagen einen gewissen Herstellungsaufwand, welcher zur Verteuerung der in hohen Stückzahlen gefertigten Datenkarten beiträgt.

Der Erfindung liegt die Aufgabe zugrunde, eine Datenkarte wie insbesondere eine kontaktlose Chipkarte, ein Verfahren zur Herstellung einer Datenkarte, sowie eine Vorrichtung zur Herstellung einer solchen Datenkarte zur Verfügung zu stellen, welche bzw. welches eine einfachere und damit kostengünstigere Montage unter Berücksichtigung fertigungsbedingter Maßund Lagetoleranzen, dabei eine hohe Zuverlässigkeit und Lebensdauer der Datenkarte gewährleistet.

Diese Aufgabe wird durch eine Datenkarte nach Anspruch 1, ein Verfahren zur Herstellung einer Datenkarte nach Anspruch 2, sowie eine Vorrichtung zur Herstellung einer Chipkarte nach Anspruch 11 gelöst.

Erfindungsgemäß ist vorgesehen, zur Egalisierung des Höhenausgleiches von Teilstrukturen des Modulelementes bzw. der Kartendecklage und Kartenbodenlage und zur Ausfüllung von Hohlräumen innerhalb des Modulelementes bzw. von Hohlräumen zwischen Modulelement und der Kartendecklage und/oder Kartenbodenlage ein zwischen dem Modulelement und der Kartendecklage und/oder der Kartenbodenlage anzuordnende nivellierende Ausgleichsschicht aus einem Nivellierungsmaterial vorzusehen.

Dem Prinzip der Erfindung folgend wird das Nivellierungsmaterial der Ausgleichschicht in flüssiger oder wenigstens nahezu flüssiger Konsistenz beim Zusammenfügen von Kartenbodenlage, Kartendecklage, und Modulelement aufgetragen und daran anschließend ausgehärtet. Ein wesentliches Merkmal des Nivellierungsmaterials besteht darin, daß es im unausgehärteten Zustand ein Fluidverhalten mit definierter Viskosität besitzt, um ein Ausfüllen von Vertiefungen und Strukturen, beispielsweise von Durchgangs- und Sacklochbohrungen in der Inlett-Trägerfolie des Modulelementes, und von Erhebungen von Teilstrukturen des Modulelementes, beispielsweise von Streifenwellenleitern einer Induktionsspule und Preßmassenkörper zu ermöglichen. Der besondere Vorteil besteht darin, daß fertigungsbedingte Maß- und Lagetoleranzen durch die Flüssigphase des Nivellierungsmateriales ausgeglichen werden können. Nach dem Auftrag kann das Nivellierungsmaterial durch Wärme oder Lichtstrahlung ausgehärtet werden. Bei Verwendung eines UV-härtenden Lackes für das Nivellierungsmaterial kann durch kurzzeitige Bestrahlung mit einer oder mehreren Lichtquellen, vorzugsweise mit Wellenlängen im UV-Bereich eine langlebige Aushärtung und damit ausreichende mechanische Festigkeit der Ausgleichsschicht erzielt werden. Vorzugsweise ist hierbei wenigstens der dem Modulelement zugeordnete Abschnitt von Kartendecklage und/oder Kartenbodenlage aus einem für die Lichtstrahlung transparenten oder wenigstens durchscheinenden Material hergestellt. Vorteilhaft sind insbesondere nichtpigmentierte, hochamorphe, dünne Thermoplast-Folien für die Kartendecklage und/oder die Kartenbodenlage des Kartenkörpers.

Zur Erzielung einer möglichst schnellen Polymerisation sind für das Nivellierungsmaterial der Ausgleichsschicht insbesondere UV-härtende Epoxide mit kationischer Nachhärtung geeignet. Diese härten beispielsweise in weniger als 60 Sekunden vollständig aus und sind daher für die Massenfertigung von Datenkarten geeignet. Verursacht werden die hochkinetischen chemischen Umsetzungen durch im Epoxid befindliche und die den kationischen Prozeß auslösenden Indikatoren, beispielsweise aus SbF₆. Kationisch UV-härtende Epoxidharze können einkomponentig zur Verfügung gestellt werden, so daß ein aufwendiges Anmischen von Einzelkomponenten entfallen kann. Demgegenüber besitzen Topfzeiten untergeordnete Bedeutung.

Im Hinblick auf laminiertechnische Vorteile kann die zur Abstützung des Modulelementes vorgesehene Trägerlage, die zwischen Kartendecklage und Kartenbodenlage angeordnet ist, aus einem artgleichen Thermoplastmaterial bestehen wie die Decklagen. Bei einer besonders bevorzugten Ausführung ist daher vorgesehen, daß das Material von Kartendecklage und/oder Kartenbodenlage und Trägerlage ein Thermoplast-Material aufweist, insbesondere Polyvinylclorid, Polycarbonat, Polypropylen, Acryl-Butadien-Styrol und/oder Polyamid. Für den Fall, daß die Trägerlage bzw. Folie ebenfalls aus einem dieser Thermoplaste besteht, sollte der UV-härtende Lack als Nivellierungsmaterial der Ausgleichsschicht dilathermisch, d.h. im Hinblick der bei Festkörpern zu beobachtenden relativen Änderung der räumlichen Abmessungen bei Änderung der Temperatur, zum Material der Trägerlage angepaßt sein, um bei Erwärmung oder Abkühlung des Kartenkörpers bimorphbedingte Verformungen aufgrund unterschiedlicher Formgebungen zu vermeiden.

Der lineare Ausdehnungskoeffizient von ABS beträgt etwa 100 ppm/K, von PVC 80 bis 150 ppm/K, von PC 70 ppm/K und von PP 150 bis 200 ppm/K. Die höchsten thermischen Ausdehnungskoeffizienten von einkomponentigen UV-härtenden Epoxidharzen betragen etwa 80 bis 120 ppm/K, d.h. sie liegen etwas unterhalb der Werte für die Materialien der Deck- oder Trägerlagen, wobei sich sämtliche genannten Werte auf den Temperaturbereich von etwa 20 bis 80° Celsius beziehen. Um trotzdem eine Verformung nach Auftrag und Aushärtung des Nivellierungsmaterials und Aufheizung bzw. Abkühlung des Kartenkörpers zu vermeiden, sollte die Materialsteifigkeit möglichst niedrig sein. Kennzeichen für die Materialsteifigkeit ist der E-Modul. Da dieser an dünnen Klebstoffschichten nur schwer meßbar ist, kann als indirekte Nachweisgröße die Härte herangezogen werden. Die niedrigste Härte dieser Systeme liegt bei Shore A 20 (nach DIN 53505). Eingestellt wird dieser Wert durch sehr hohe Zusätze von Flexibilisierern, beispielsweise von Polyolen. Sie können in der gleichen Volumenkonzentration wie das Harz des Nivellierungsmateriales vorliegen.

Damit die Fluidphase des Nivellierungsmateriales nicht zu dünnflüssig ist, da sie ansonsten während der Aufbringung seitlich über die Kanten von Modulelement bzw. Trägerlage tritt und das Laminierwerkzeug verschmiert, kann die flüssige Phase des Nivellierungsmaterials mit einem Tixotropiermittel, beispielsweise mit PA-Pasten und -Wachsen bzw. mit einem Verdicker versehen sein. Als Verdicker sind Aerosite (eingetragenes Warenzeichen) vorteilhaft, welche aus amorphen SiO₂ bestehen.

Weitere Merkmale, Vorteile und Zweckmäßigkeiten der Erfindung ergeben sich aus der Beschreibung von Ausführungsbeispielen anhand der Zeichnung. Es zeigt:
- Figur 1: eine schematische Ansicht einer erfindungsgemäßen Vorrichtung zur Herstellung einer Datenkarte; und
- Figur 2: eine schematische Teilansicht einer Vorrichtung zur Herstellung einer Datenkarte gemäß einem weiteren Ausführungsbeispiel der Erfindung.

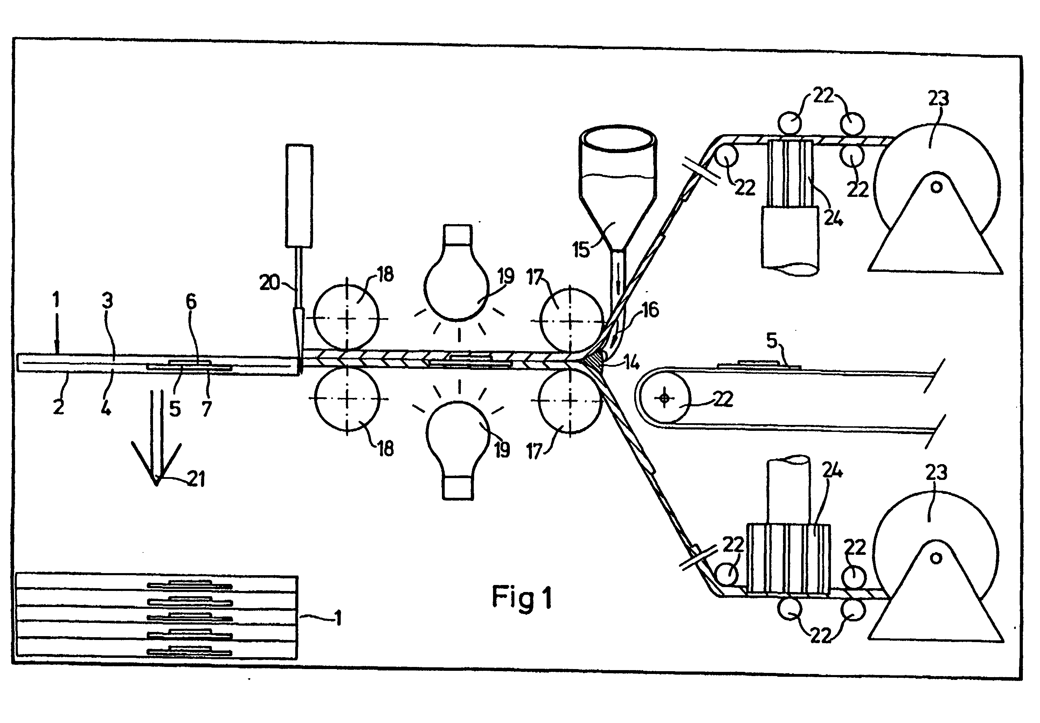

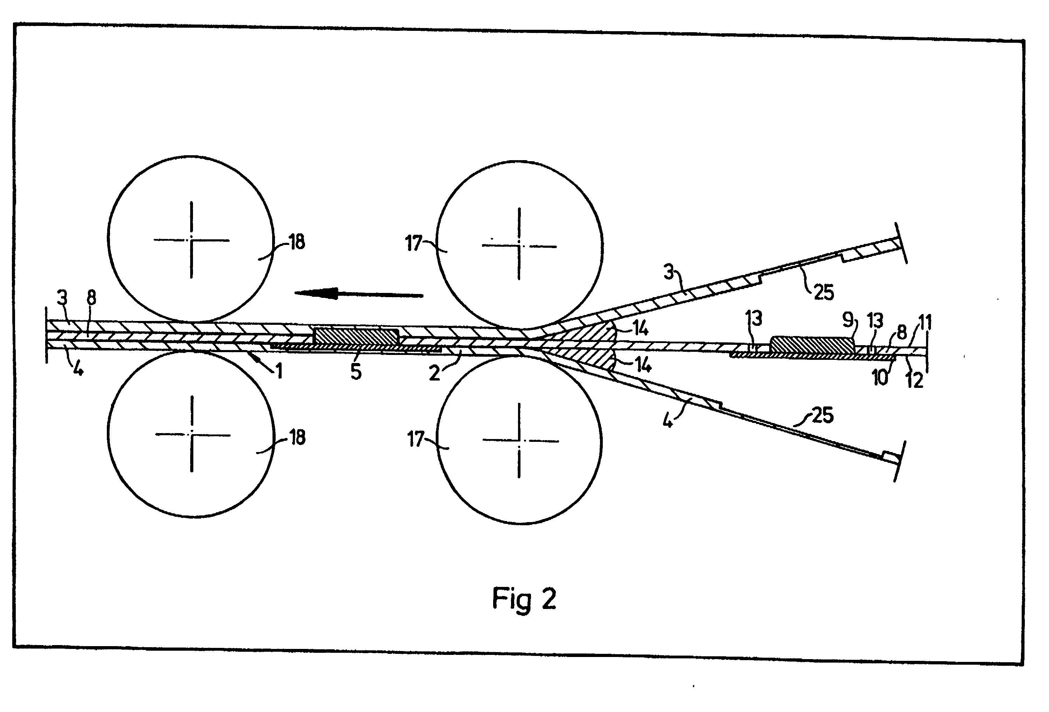

Die in den Figuren 1 und 2 schematisch gezeichneten Darstellungen zeigen Ausführungsbeispiele der erfindungsgemäßen Vorrichtung und Verfahren zur Herstellung einer Datenkarte 1, welche eine Kartenkörper 2 bestehend aus wenigstens einer Kartendecklage 3 und wenigstens einer Kartenbodenlage 4, deren äußere Abmessungen sich entsprechen, und ein innerhalb des Kartenkörpers 2 zwischen Kartendecklage 3 und Kartenbodenlage 4 eingepaßtes Modulelement 5 mit einer (lediglich schematisch angedeuteten) integriert ausgebildeten elektronischen Schaltung 6 zur Verarbeitung und/oder Speicherung personenbezogener Daten aufweist. Das Modulelement 5 wird als eigenständiges, separates Bauteil in an sich bekannter Weise gefertigt und umfaßt neben der integriert ausgebildeten elektronischen Schaltung 6 weitere Komponenten, die nicht explizit dargestellt sind, insbesondere einen Preßmassenkörper 7, in welchem ein mit der elektronischen Schaltung 6 verbundenes Koppelelement, insbesondere eine Induktionsspule mit streifenförmig gefertigten Spulenwindungen eingepaßt sein kann. Bei dem Ausführungsbeispiel nach Figur 2 kann das separat gefertigte Modulelement darüber hinaus insbesondere eine Trägerfolie 8 besitzen, die fest mit den übrigen Bestandteilen des Modulelementes 5 verbunden ist und zur mechanischen Abstützung insbesondere einer Induktionsspule dient. In jedem Fall besitzt das Modulelement 5 in den Figuren lediglich schematisch angedeutete Erhebungen 9, 10 gegenüber einer Referenzoberfläche 11, 12 des Modulelementes 5 sowie Hohlräume und Vertiefungen, beispielsweise aufgrund von Durchgangsbzw. Sacklochbohrungen in der Trägerfolie 8, welche in Figur 2 ebenfalls lediglich schematisch durch das Bezugszeichen 13 angedeutet sind. Die wahren geometrischen Abmessungen solcher in dem Modulelement 5 vorhandenen Erhebungen und Hohlräume bzw. Vertiefungen sind wesentlich kleiner als in den Figuren 1 und 2 darstellbar. Zur Ausfüllung der vorhandenen Hohlräume bzw. Vertiefungen 13 und zur Egalisierung von Erhebungen 9 und 10 wird erfindungsgemäß beim Zusammenfügen von Kartendecklage 3 und Kartenbodenlage 4 mit dem dazwischen angeordneten Modulelement 5 ein Nivellierungsmaterial 14 in im wesentlichen flüssiger oder wenigstens fließfähiger Konsistenz aus einem Abgabe- bzw. Dosiermittel 15 gemäß Pfeile 16 (siehe Figur 1) dosiert eingebracht, und füllt sämtliche Hohlräume und Erhebungen aufgrund von Teilstrukturen des Modulelementes 5 zwischen Kartendecklage 3 und Kartenbodenlage 4 aus. Die Einführung des Nivellierungsmaterials 14 erfolgt wie schematisch dargestellt unmittelbar vor der Laminierungsstufe, bei der die einzelnen Lagen und das Modulelement 5 vermittels vorzugsweise beheizbarer Laminierwalzenpaare 17, 18 unter Druck zur Fertigung des Kartenkörpers 2 zusammengeschweißt werden.

Bei der beispielshaften Ausführung kann das Nivellierungsmaterial in der Form eines UV-härtenden Lackes folgende Zusammensetzungen und physikalischen Eigenschaften besitzen:

| Zusammensetzung: | |
|---|---|
| Harz, beispielsweise cycloaliphatisch | 20 - 40 % |
| Flexibilisierer | 20 - 50 % |
| Photoinitiator | > 0,5 |
| Verdicker | ≤ 10 % |
| PA-Paste | ≤ 10 % |

| Physikalische Eigenschaften: | |
|---|---|
| Viskosität (bei 20° Celsius) | 9 000 - 15 000 mPas |
| Aushärtezeit (bei UVA 90 mW/cm²) | ≤ 30 s |
| Härte | 100 Shore A |
| Temperaturbeständigkeit | ≥ 150° Celsius |
| Wärmedehnung | 80 - 120 ppm/K |

Zur nachfolgenden Aushärtung des Nivellierungsmaterials 14 erfolgt eine kurzzeitige Bestrahlung mit Licht geeigneter Wellenlänge, welches durch eine geeignete, schematisch durch die Bezugsziffer 19 angedeutete Lichtquelle erzeugt wird. Zur Beschleunigung des Aushärtprozesses können (nicht näher dargestellte) Heizstufen nachgeschaltet sein.

In der schematisch durch das Bezugszeichen 20 angedeuteten Schneideeinrichtung werden die einzelnen Datenkarten 1 abgetrennt und können anschließend gemäß Pfeil 21 in einem Sammelbehältnis oder dergleichen abgelegt werden.

Die in den Figuren 1 und 2 dargestellten Ausführungsbeispiele zeigen exemplarisch die Herstellung des Kartenkörpers 2 der Datenkarte 1 für den punktförmigen Auftrag des fließfähigen Nivellierungsmaterials 14 an einer Stelle unmittelbar vor dem ersten Laminierwalzenpaar 17, d.h. ein Auftrag des Nivellierungsmaterials bei Rolle zu Rolle. Demgegenüber ist es ebenfalls denkbar und dem Prinzip der Erfindung folgend, die Materialeinführung des Nivellierungsmaterials 14 über eine vor der Laminierungsstufe dünn aufgetragene, flächenmäßige Schicht des Nivellierungsmaterials vorzusehen.

Bei den dargestellten Ausführungsbeispielen erfolgt die Zuführung von Kartendecklage 3 und Kartenbodenlage 4 über Förderwalzen 22 in Endlosform aus Vorratsrollen 23, wobei schematisch angedeutete Fräswerkzeuge 24 zur Ausbildung einer Ausnehmung 25 an vorbestimmter Position von Kartendecklage 3 und Kartenbodenlage 4 vorgesehen sein können, welche Ausnehmung 25 zur Aufnahme wenigstens eines Teils des Modulelementes 5 ausgebildet ist. Die Erfindung kann mit Erfolg jedoch auch bei der Fertigung von Datenkarten in Bogentechnik angewandt werden, bei der die einzelnen Lagen 3, 4 als Bogenlaminate zugeführt und miteinander verschweißt werden.

## Patentansprüche

1. Datenkarte (1) mit einem Kartenkörper (2) bestehend aus wenigstens einer Kartendecklage (3) und wenigstens einer Kartenbodenlage (4), deren äußere Abmessungen sich entsprechen, und einem innerhalb des Kartenkörpers (2) zwischen Kartendecklage (3) und Kartenbodenlage (4) eingepaßten Modulelement (5) mit einer integriert ausgebildeten elektronischen Schaltung (6) zur Verarbeitung und/oder Speicherung personenbezogener Daten, wobei zwischen dem Modulelement (5) und der Kartendecklage (3) und/oder der Kartenbodenlage (4) eine Ausgleichsschicht angeordnet bzw. ausgebildet ist,
**dadurch gekennzeichnet, daß**
die zwischen dem Modulelement (5) und der Kartendecklage (3) und/oder der Kartenbodenlage (4) angeordnete bzw. ausgebildete Ausgleichsschicht aus einem Nivellierungsmaterial (14) in flüssiger oder wenigstens nahezu flüssiger Konsistenz aufgetragen und daran anschließend ausgehärtet ist und zur Ausfüllung von vorhandenen Hohlräumen (13) in dem Modulelement (5) bzw. zwischen Modulelement (5) und der Kartendecklage (3) und/oder Kartenbodenlage (4) und/oder von vorhandenen überstehenden Erhebungen (9, 10) auf der Oberfläche des Modulelementes (5) dient.

2. Verfahren zur Herstellung einer Datenkarte (1) mit einem Kartenkörper (2) und einem innerhalb des Kartenkörpers (2) eingebrachten Modulelement (5) mit einer integriert ausgebildeten elektronischen Schaltung (6) zur Verarbeitung und Speicherung personenbezogener Daten, mit den Schritten:
- Herstellen des Modulelementes (5) als separates, eigenständiges Bauteil,
- Vorsehen wenigstens einer Kartendecklage (3) und wenigstens einer Kartenbodenlage (4),
- Zusammenfügen von Kartendecklage (3), Modulelement (5) und Kartenbodenlage (4) zur Ausbildung des Kartenkörpers (2) der Datenkarte (1), wobei zwischen dem Modulelement (5) und der Kartendecklage (3) und/oder der Kartenbodenlage (4) eine Ausgleichsschicht angeordnet bzw. ausgebildet wird,
**dadurch gekennzeichnet, daß**
die zwischen dem Modulelement (5) und der Kartendecklage (3) und/oder der Kartenbodenlage (4) angeordnete bzw. ausgebildete Ausgleichsschicht aus einem Nivellierungsmaterial (14) in flüssiger oder wenigstens nahezu flüssiger Konsistenz aufgetragen und daran anschließend ausgehärtet wird und zur Ausfüllung von vorhandenen Hohlräumen (13) in dem Modulelement (5) bzw. zwischen Modulelement (5) und der Kartendecklage (3) und/oder Kartenbodenlage (4) und/oder von vorhandenen überstehenden Erhebungen (9, 10) auf der Oberfläche des Modulelementes (5) dient.

3. Datenkarte bzw. Verfahren nach Anspruch 1 oder 2, **dadurch gekennzeichnet, daß** das Nivellierungsmaterial (14) der Ausgleichsschicht ein durch Lichtstrahlung mit einer Wellenlänge insbesondere im Ultraviolettbereich aushärtbares Lackmaterial aufweist, und wenigstens der dem Modulelement (5) zugeordnete Abschnitt von Kartendecklage (3) und/oder Kartenbodenlage (4) aus einem für die Lichtstrahlung transparenten oder wenigstens durchscheinenden Material hergestellt wird.

4. Datenkarte bzw. Verfahren nach Anspruch 1, 2 oder 3, **dadurch gekennzeichnet, daß** das Nivellierungsmaterial (14) ein UV-härtendes Epoxid mit kationischer Nachhärtbarkeit aufweist.

5. Datenkarte bzw. Verfahren nach einem der vorhergehenden Ansprüche, **dadurch gekennzeichnet, daß** das Nivellierungsmaterial (14) und das Material von Kartendecklage (3) und/oder Kartenbodenlage (4) dilathermisch zueinander angepaßt sind.

6. Datenkarte bzw. Verfahren nach einem der vorhergehenden Ansprüche, **dadurch gekennzeichnet, daß** das Material von Kartendecklage (3) und/oder Kartenbodenlage (4) und/oder Trägerlage ein Thermoplast-Material aufweist, insbesondere Polyvinylclorid, Polycarbonat, Polypropylen, Acryl-Butadien-Styrol und/oder Polyamid.

7. Datenkarte bzw. Verfahren nach einem der vorhergehenden Ansprüche, **dadurch gekennzeichnet, daß** das Nivellierungsmaterial (14) einen Flexibilisierungszusatz und/oder einen Verdickungszusatz aufweist.

8. Datenkarte bzw. Verfahren nach einem der vorhergehenden Ansprüche, **dadurch gekennzeichnet, daß** zur Abstützung des Modulelementes (5) eine Trägerlage vorgesehen wird, die zwischen Kartendecklage (3) und Kartenbodenlage (4) angeordnet wird.

9. Datenkarte bzw. Verfahren nach einem der vorhergehenden Ansprüche, **dadurch gekennzeichnet, daß** der dem Modulelement (5) zugeordnete Abschnitt von Kartendecklage (3) und/oder Kartenbodenlage (4) mit einer Ausnehmung (25) zur Aufnahme wenigstens eines Teils des Modulelementes (5) versehen ist.

10. Datenkarte bzw. Verfahren nach einem der vorhergehenden Ansprüche, **dadurch gekennzeichnet, daß** das Modulelement (5) ein Koppelelement, insbesondere eine Induktionsspule integriert ausgebildet aufweist.

11. Vorrichtung zur Herstellung einer Datenkarte (1) mit einem Kartenkörper (2) und einem innerhalb des Kartenkörpers (2) eingepaßten Modulelement (5) mit einer integriert ausgebildeten elektronischen Schaltung (6) zur Verarbeitung und Speicherung personenbezogener Daten, welche Vorrichtung aufweist:
- ein Fördermittel (22) für die Zufuhr wenigstens einer Kartendecklage (3) und wenigstens einer Kartenbodenlage (4) für die Ausbildung des Kartenkörpers (2),
- ein Fügemittel (17, 18) zur Zusammenführung und Fügung von Kartendecklage (3) und Kartenbodenlage (4) und Modulelement (5),
**gekennzeichnet durch**
- ein Abgabe- bzw. Dosiermittel (15) zur Einbringung einer die vorhandenen Hohlräume (13) zwischen dem Modulelement (5) und der Kartendecklage (3) und/oder der Kartenbodenlage (4) ausfüllenden und/oder die vorhandenen überstehenden Erhebungen (9, 10) auf der Oberfläche des Modulelementes (5) nivellierenden Ausgleichsschicht aus einem Nivellierungsmaterial (14), und
- ein Aushärtmittel (19) zum Aushärten des Nivellierungsmateriales (14) der Ausgleichsschicht.

12. Vorrichtung nach Anspruch 11, **dadurch gekennzeichnet, daß** das Aushärtmittel eine Strahlungsquelle (19) zur Aussendung von Strahlung mit einer Wellenlänge insbesondere im Ultraviolettbereich aufweist.

13. Vorrichtung nach Anspruch 11 oder 12, **dadurch gekennzeichnet, daß** ein Ausnehmungserzeugungsmittel (24) zur Ausbildung einer Ausnehmung (25) in einem dem Modulelement (5) zugeordneten Abschnitt von Kartendecklage (3) und/oder Kartenbodenlage (4) vorgesehen ist.

## Claims

1. Data card (1) having a card body (2) comprising at least one card top layer (3) and at least one card bottom layer (4), the outer dimensions of which correspond to one another, and a module element (5) which is fitted in between the card top layer (3) and card bottom layer (4) within the card body (2) and has an integrated electronic circuit (6) for the processing and/or storing of personal data, a compensating layer being arranged or formed between the module element (5) and the card top layer (3) and/or the card bottom layer (4), **characterized in that** the compensating layer of a levelling material (14) arranged or formed between the module element (5) and the card top layer (3) and/or the card bottom layer (4) is applied in liquid or at least virtually liquid consistency and is subsequently cured, and is used for filling existing cavities (13) in the module element (5) or between the module element (5) and the card top layer (3) and/or card bottom layer (4) and/or existing protruding elevations (9, 10) on the surface of the module element (5).

2. Process for manufacturing a data card (1) having a card body (2) and a module element (5) which is introduced within the card body (2) and has an integrated electronic circuit (6) for the processing and storing of personal data, having the steps:
- manufacturing the module element (5) as a separate, independent component,
- providing at least one card top layer (3) and at least one card bottom layer (4),
- joining together the card top layer (3), module element (5) and card bottom layer (4) to form the card body (2) of the data card (1), a compensating layer being arranged or formed between the module element (5) and the card top layer (3) and/or the card bottom layer (4), **characterized in that** the compensating layer of a levelling material (14) arranged or formed between the module element (5) and the card top layer (3) and/or the card bottom layer (4) is applied in liquid or at least virtually liquid consistency and is subsequently cured, and is used for filling existing cavities (13) in the module element (5) or between the module element (5) and the card top layer (3) and/or card bottom layer (4) and/or existing protruding elevations (9, 10) on the surface of the module element (5).

3. Data card or process according to Claim 1 or 2, **characterized in that** the levelling material (14) of the compensating layer includes a coating material which can be cured by light radiation with a wavelength in particular in the ultraviolet range, and at least the portion of the card top layer (3) and/or card bottom layer (4) which is assigned to the module element (5) is produced from a material which is transparent or at least translucent to the light radiation.

4. Data card or process according to Claim 1, 2 or 3, **characterized in that** the levelling material (14) includes a UV-curing epoxy with cationic post-curability.

5. Data card or process according to one of the preceding claims, **characterized in that** the levelling material (14) and the material of the card top layer (3) and/or card bottom layer (4) are adapted dilathermally to each other.

6. Data card or process according to one of the preceding claims, **characterized in that** the material of the card top layer (3) and/or card bottom layer (4) and/or the carrier layer includes a thermoplastic material, in particular polyvinylchloride, polycarbonate, polypropylene, acrylic-butadiene-styrene [sic] and/or polyamide.

7. Data card or process according to one of the preceding claims, **characterized in that** the levelling material (14) includes a flexibilizing additive and/or a thickening additive.

8. Data card or process according to one of the preceding claims, **characterized in that**, for supporting the module element (5), there is provided a carrier layer, which is arranged between the card top layer (3) and the card bottom layer (4).

9. Data card or process according to one of the preceding claims, **characterized in that** the portion of the card top layer (3) and/or card bottom layer (4) which is assigned to the module element (5) is provided with a recess (25) for receiving at least part of the module element (5).

10. Data card or process according to one of the preceding claims, **characterized in that** the module element (5) has an integrated coupling element, in particular an induction coil.

11. Apparatus for manufacturing a data card (1) having a card body (2) and a module element (5) which is fitted in within the card body (2) and has an integrated electronic circuit (6) for the processing and storing of personal data, which apparatus has:
- a conveying means (22) for the feeding of at least one card top layer (3) and at least one card bottom layer (4) for the forming of the card body (2),
- a joining means (17, 18) for bringing together and joining the card top layer (3) and card bottom layer (4) and module element (5),
**characterized by**
- a dispensing or metering means (15) for introducing a compensating layer of a levelling material (14) which fills the existing cavities (13) between the module element (5) and the card top layer (3) and/or the card bottom layer (4) and/or levels the existing protruding elevations (9, 10) on the surface of the module element (5), and
- a curing means (19) for curing the levelling material (14) of the compensating layer.

12. Apparatus according to Claim 11, **characterized in that** the curing means has a radiation source (19) for emitting radiation with a wavelength in particular in the ultraviolet range.

13. Apparatus according to Claim 11 or 12, **characterized in that** a recess-producing means (24) is provided for forming a recess (25) in a portion of the card top layer (3) and/or card bottom layer (4) which is assigned to the module element (5).

## Revendications

1. Carte de données (1) comportant un corps de carte (2) constitué d'au moins d'une couche de carte supérieure (3) et d'au moins d'une couche de carte inférieure (4), dont les dimensions extérieures se correspondent, et un élément modulaire (5) intégré dans le corps de carte (2) entre la couche de carte supérieure (3) et la couche de carte inférieure (4) et comprenant un circuit électronique intégré (6) destiné à traiter et/ou mémoriser des données personnelles, une couche compensatrice étant constituée ou interposée entre l'élément modulaire (5) et la couche de carte supérieure (3) et/ou la couche de carte inférieure (4),
**caractérisée en ce que** la couche compensatrice interposée ou constituée entre l'élément modulaire (5) et la couche de carte supérieure (3) et/ou la couche de carte inférieure (4) et constituée d'une matière de nivelage (14) de consistance liquide ou du moins presque liquide est appliquée puis durcie et sert à noyer des espaces creux (13) présents dans l'élément modulaire (5) ou entre l'élément modulaire (5) et la couche de carte supérieure (3) et/ou la couche de carte inférieure (4) et/ou des saillies (9, 10) présentes à la surface de l'élément modulaire (5).

2. Procédé de fabrication d'une carte de données (1) comportant un corps de carte (2) et un élément modulaire (5) incorporé dans le corps de carte (2) et comportant un circuit électronique intégré (6) destiné à traiter et mémoriser des données personnelles, lequel procédé possède les étapes consistant à :
- fabriquer l'élément modulaire (5) en tant que composant autonome et distinct,
- prévoir au moins une couche de carte supérieure (3) et au moins une couche de carte inférieure (4),
- assembler la couche de carte supérieure (3), l'élément modulaire (5) et la couche de carte inférieure (4) en vue de constituer le corps de carte (2) de la carte de données (1), une couche compensatrice étant interposée ou constituée entre l'élément modulaire (5) et la couche de carte supérieure (3) et/ou la couche de carte inférieure (4),
**caractérisé en ce que** la couche compensatrice interposée ou constituée entre l'élément modulaire (5) et la couche de carte supérieure (3) et/ou la couche de carte inférieure (4) et constituée d'une matière de nivelage (14) de consistance liquide ou du moins presque liquide est appliquée puis est durcie et sert à noyer des espaces creux (13) présents dans l'élément modulaire (5) ou entre l'élément modulaire (5) et la couche de carte supérieure (3) et/ou la couche de carte inférieure (4) et/ou des saillies (9, 10) présentes à la surface de l'élément modulaire (5).

3. Carte de données ou procédé selon la revendication 1 ou 2, **caractérisé en ce que** la matière de nivelage (14) de la couche compensatrice est un vernis durcissable au moyen d'un rayonnement lumineux de longueur d'onde située en particulier dans la gamme des ultraviolets, et au moins la portion, associée à l'élément modulaire, de la couche de carte supérieure (3) et/ou de la couche de carte inférieure (4) est fabriquée à partir d'une matière transparente ou du moins translucide pour le rayonnement lumineux.

4. Carte de données ou procédé selon la revendication 1, 2 ou 3, **caractérisé en ce que** la matière de nivelage (14) est une résine époxyde durcissant aux UV ayant une capacité de durcissement ultérieur cationique.

5. Carte de données ou procédé selon l'une des revendications précédentes, **caractérisé en ce que** la matière de nivelage (14) et la matière constituant la couche de carte supérieure (3) et/ou la couche de carte inférieure (4) sont adaptées entre elles du point de vue de la dilatation thermique.

6. Carte de données ou procédé selon l'une des revendications précédentes, **caractérisé en ce que** la matière constituant la couche de carte supérieure (3) et/ou la couche de carte inférieure (4) et/ou la couche de support est une matière thermoplastique, en particulier du chlorure de polyvinyle, du polycarbonate, du polypropylène, de l'acryle-butadiène-styrène et/ou du polyamide.

7. Carte de données ou procédé selon l'une des revendications précédentes, **caractérisé en ce que** la matière de nivelage (14) comporte un agent assouplissant supplémentaire et/ou un agent épaississant supplémentaire.

8. Carte de données ou procédé selon l'une des revendications précédentes, **caractérisé en ce que** pour soutenir l'élément modulaire (5) il est prévu une couche de support qui est interposée entre la couche de carte supérieure (3) et la couche de carte inférieure (4).

9. Carte de données ou procédé selon l'une des revendications précédentes, **caractérisé en ce que** la portion, associée à l'élément modulaire (5), de la couche de carte supérieure (3) et/ou de la couche de carte inférieure (4) est dotée d'une cavité (25) destinée à recevoir au moins une partie de l'élément modulaire (5).

10. Carte de données ou procédé selon l'une des revendications précédentes, **caractérisé en ce que** l'élément modulaire (5) comporte un élément de couplage se présentant en particulier sous la forme d'une bobine d'induction intégrée.

11. Dispositif pour fabriquer une carte de données (1) comportant un corps de carte (2) et un élément modulaire (5) inséré dans le corps de carte (2) et possédant un circuit électronique intégré (6) destiné à traiter et mémoriser des données personnelles, lequel dispositif comporte :
- un moyen d'alimentation (22) pour amener au moins une couche de carte supérieure (3) et au moins une couche de carte inférieure (4) pour constituer le corps de carte (2),
- un moyen d'assemblage (17, 18) pour amener ensemble et assembler la couche de carte supérieure (3) et la couche de carte inférieure (4) et l'élément modulaire (5),
**caractérisé par**
- un moyen de délivrance ou de dosage (15) pour introduire une couche compensatrice, constituée d'une matière de nivelage (14), qui noie les espaces creux ménagés entre l'élément modulaire (5) et la couche de carte supérieure (3) et/ou la couche de carte inférieure (4) et/ou les saillies présentes à la surface de l'élément modulaire (5), et
- un moyen de durcissement (19) pour durcir la matière de nivelage (14) de la couche compensatrice.

12. Dispositif selon la revendication 11, **caractérisé en ce que** le moyen de durcissement comporte une source de rayonnement (19) destinée à émettre un rayonnement de longueur d'onde située en particulier dans la gamme des ultraviolets.

13. Dispositif selon la revendication 11 ou 12, **caractérisé en ce qu'**il est prévu un moyen d'évidement (24) pour réaliser une cavité (25) dans une portion, associée à l'élément modulaire (5), de la couche de carte supérieure (3) et/ou la couche de carte inférieure (4).
